# FASCICULE DE BREVET EUROPEEN

(11) **EP 3 824 197 B1**
(45) Date de publication et mention de la délivrance du brevet: **30.08.2023**
(21) Numéro de dépôt: 19790610.0
(22) Date de dépôt: 19.06.2019
(51) Int. Cl.: F16B 21/07, F16B 19/10

(54) **DISPOSITIF DE FIXATION DE DEUX ÉLÉMENTS PLANS**
BEFESTIGUNGSVORRICHTUNG FÜR ZWEI FLACHE ELEMENTE
FIXING DEVICE FOR TWO FLAT ELEMENTS

(30) Priorité: 19.07.2018 FR 1856690
(43) Date de publication de la demande: 26.05.2021
(73) Titulaire: A. Raymond et Cie, 38000 Grenoble (FR)
(72) Inventeur: MOUILLON, Romain, 38340 VOREPPE (FR); DE MARCO, Sebastien, 38380 SAINT PIERRE DE CHARTREUSE (FR)
(74) Mandataire: IP Trust
(86) Numéro de dépôt international: PCT/FR2019/051499
(87) Numéro de publication internationale: WO 2020/016497

(56) Documents cités:
- WO-A2-03/072957
- DE-A1-102010 034 006
- DE-A1-102016 012 437
- GB-A- 848 100
- US-A- 5 775 860
- US-A1- 2006 066 080
- US-A1- 2014 093 325
- US-A1- 2016 305 461

## Description

### DOMAINE DE L'INVENTION

La présente invention concerne un dispositif de fixation d'éléments plans. Ce type de dispositif trouve notamment son intérêt dans le domaine de l'automobile.

### ARRIERE PLAN TECHNOLOGIQUE DE L'INVENTION

Dans le domaine automobile, il peut être nécessaire de pouvoir fixer d'éléments plans entre eux tels que des supports ou modules sur des parties d'un véhicule. Il peut par exemple s'agir de la fixation d'un panneau sur une porte ou encore d'un pare-boue sur une partie de la carrosserie. Il existe plusieurs techniques de fixation pour atteindre ce but, tel que l'emploi de rivets de connexion ou de vis. Toutefois, ces techniques peuvent rendre la fixation compliquée à mettre en place et ne pas être facilement démontables.

Les dispositifs de fixation connus des documents US8496420, DE1020010034006 et WO2016171863 cherchent à remédier à ces inconvénients. Ces documents présentent un dispositif de fixation composé d'une agrafe et d'une goupille. Chaque élément plan est muni d'une ouverture, et les ouvertures sont mises en regard l'une de l'autre lorsque les deux éléments plans sont placés l'un contre l'autre en position d'assemblage. L'agrafe est introduite dans les ouvertures puis la goupille est disposée dans l'agrafe pour verrouiller l'assemblage et fixer ensemble les deux éléments plans.

Les éléments plans peuvent présenter une variabilité d'épaisseur d'un assemblage à l'autre. L'effort de montage des dispositifs de fixation de l'état de la technique, et notamment l'effort qu'il est nécessaire d'appliquer à la goupille pour la faire pénétrer dans l'agrafe, peut varier selon l'épaisseur effective des deux éléments plans qui doivent être assemblés. Cet effort de montage peut ainsi devenir excessif lorsque l'épaisseur de l'assemblage excède une épaisseur déterminée, ce qui n'est pas souhaitable.

### OBJET DE L'INVENTION

Un but de l'invention est de proposer un dispositif de fixation de deux éléments plans pour lequel l'effort de montage est moins dépendant de l'épaisseur des éléments plans que dans le cas des dispositifs de fixation selon l'état de la technique.

### BREVE DESCRIPTION DE L'INVENTION

En vue de la réalisation de ce but, l'objet de l'invention propose un dispositif de fixation d'un assemblage comprenant au moins deux éléments plans, les éléments plans étant pourvus d'ouvertures mises en regard les unes aux autres lorsqu'ils sont en position d'assemblage, le dispositif de fixation comprenant une agrafe destinée à être insérée dans les ouvertures des éléments plans et à maintenir les éléments plans les uns aux autres entre un premier et un second appui.

L'agrafe comprend une tête plane pour prendre le premier appui sur la surface principale de l'un des éléments plan, la tête plane présentant une ouverture centrale pour accéder à un logement interne de l'agrafe ; deux montants latéraux configurés pour prendre le second appui sur un autre des éléments plans, les montants latéraux présentant une première extrémité solidaire de la tête et une seconde extrémité, les secondes extrémités étant reliées entre elles de sorte que les deux montants latéraux définissent le logement interne de l'agrafe.

Le dispositif de fixation comprend également une goupille destinée à être insérée dans le logement interne de l'agrafe pour verrouiller l'assemblage. Selon l'invention, la goupille comprend au moins un pontet flexible présentant une portion centrale reliée à un corps principal de la goupille par deux portions flexibles, le pontet flexible étant destiné à entrer en contact avec un montant latéral de l'agrafe pour forcer le second appui et maintenir les éléments plan assemblés l'un à l'autre.

Selon d'autres caractéristiques avantageuses et non limitatives de l'invention, prises seules ou selon toute combinaison techniquement réalisable :
- la tête plane de l'agrafe est formée de deux palettes d'appui chaque palette d'appui étant solidaire d'un montant latéral ;
- chaque palette d'appui comprend au moins un bras définissant en partie le contour de l'ouverture centrale ;
- la tête de l'agrafe est munie de fentes pour coopérer avec des nervures de guidage disposées sur la goupille ;
- les montants latéraux ont une forme en V ;
- la goupille porte au moins un cran de maintien destiné à se loger dans au moins un trou de verrouillage de l'agrafe pour maintenir la goupille dans l'agrafe en position de livraison ;
- la goupille porte au moins un cran de verrouillage destiné à se loger dans le trou de verrouillage de l'agrafe pour maintenir la goupille dans l'agrafe en position de verrouillage ;
- chaque montant latéral de l'agrafe présente une patte de blocage destinée à coopérer avec une zone de blocage de la goupille pour maintenir la goupille dans l'agrafe en position de verrouillage ;
- la goupille est surmontée d'une tête ;
- la tête de la goupille est munie d'au moins une fente destinée à accueillir l'extrémité d'un outil pour faciliter le démontage du dispositif de fixation ;
- la portion centrale du pontet porte un bossage ;
- la goupille est en matière plastique et l'agrafe en métal ;
- la goupille comprend une paire de pontets flexibles destinés à entrer en contact avec les montants latéraux de l'agrafe.

### BREVE DESCRIPTION DES DESSINS

D'autres caractéristiques et avantages de l'invention ressortiront de la description détaillée de l'invention qui va suivre, en référence aux figures annexées sur lesquelles :
- la figure 1 représente un dispositif de fixation conforme à l'invention en vue éclatée ;
- la figure 2 représente une agrafe d'un dispositif de fixation conforme à l'invention ;
- la figure 3 représente une goupille d'un dispositif de fixation conforme à un premier mode de réalisation de l'invention ;
- la figure 4 représente une coupe transversale d'une goupille d'un dispositif de fixation conforme à un deuxième mode de réalisation ;
- la figure 5 représente un dispositif de fixation conforme à l'invention en position de livraison ;
- les figures 6A, 6B et 6C représentent les différentes étapes d'assemblage de deux éléments plans à l'aide d'un dispositif de fixation conforme à l'invention.
- la figure 7 représente une vue en coupe d'un dispositif de fixation conforme à l'invention en position verrouillée;
- les figures 8A et 8B représentent schématiquement des dispositifs de fixation conformes à l'invention en position verrouillée pour deux épaisseurs différentes d'éléments plans.

### DESCRIPTION DETAILLEE DE L'INVENTION

Par souci de simplification de la description à venir, les mêmes références sont utilisées pour des éléments identiques ou assurant la même fonction. Les figures sont des représentations schématiques qui, dans un objectif de lisibilité, ne sont pas à l'échelle.

### Présentation générale du dispositif de fixation

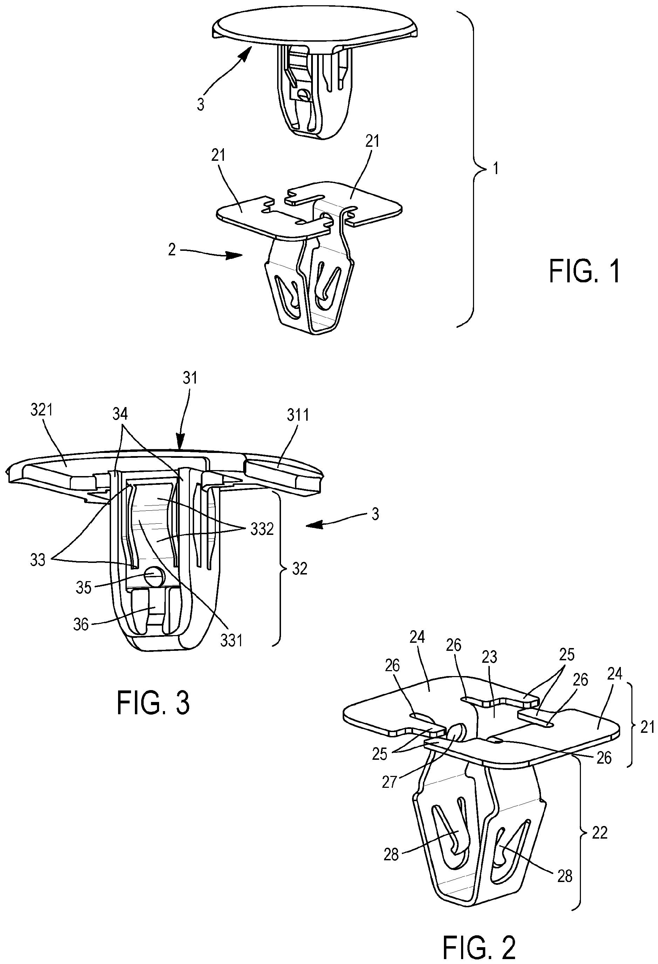

La figure 1 représente un dispositif de fixation 1 d'un assemblage comprenant au moins deux éléments plans conforme à la présente description. Le dispositif de fixation 1 est composé d'une agrafe 2 et d'une goupille 3. Il vise à maintenir les éléments plans 4 les uns contre les aux autres. Par « élément plan » 4 on entend un élément présentant au moins localement une surface plane au niveau de la région où sera disposé le dispositif de fixation 1. Il n'est pas nécessaire que l'élément plan soit complètement contenu dans un plan. Les éléments plans 4 peuvent être de natures variées, il peut s'agir par exemple d'une portière de voiture à laquelle on souhaite fixer un revêtement particulier ou encore un pare-boue que l'on souhaite fixer sur une portion de la carrosserie.

Par souci de simplification de l'exposé qui va suivre, on considérera que l'assemblage est formé de deux éléments plans, mais cela n'exclut pas la possibilité de pouvoir maintenir entre eux un nombre plus important d'éléments plans 4, par exemple si l'on souhaite intercaler un ou une pluralité d'éléments isolants entre deux éléments formant l'assemblage.

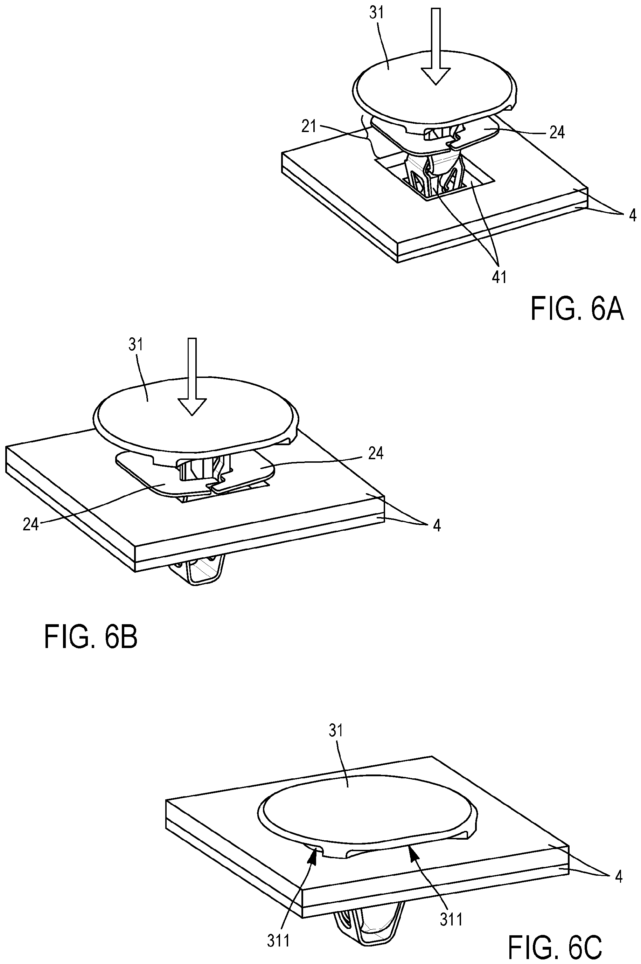

Comme cela sera décrit plus en détail en référence aux figures 6a à 6c, chaque élément plan 4 est muni d'une ouverture 41, et les ouvertures 41 sont mises en regard l'une de l'autre lorsque les deux éléments plans 4 sont placés l'un contre l'autre en position d'assemblage. L'agrafe 2 est introduite dans les ouvertures 41 pour placer sa tête plane 21 contre une surface principale de l'un des éléments plans 4, désigné élément plan supérieur, et ainsi former un premier appui A. Puis la goupille 3 est disposée dans l'agrafe 2 pour verrouiller l'assemblage et fixer ensemble les deux éléments plans 4 entre le premier appui A et un second appui B formé entre l'agrafe 2 et un autre élément plan 4, désigné élément plan inférieur.

### Description du dispositif de fixation

L'agrafe 2, représentée plus en détail sur la figure 2, est avantageusement en métal afin de favoriser sa tenue mécanique aux éléments plans. Elle peut être réalisée à partir d'une plaque métallique par pliage et découpage.

L'agrafe 2 comprend une tête plane 21 pour prendre le premier appui A sur la surface principale de l'un des éléments plan 4 et deux montants latéraux 22 configurés pour prendre le second appui B sur un autre des éléments plans 4. Les éléments plan 4 seront ainsi maintenus entre la tête plane 21 et les montants latéraux 22 de l'agrafe 2 par les deux appuis A, B.

La tête plane 21 présente une ouverture centrale 23 pour accéder à un logement interne de l'agrafe 2 par laquelle sera introduite la goupille 3.

De manière préférentielle, la tête plane 21 de l'agrafe 2 est formée de deux palettes d'appui 24, mécaniquement séparées, chaque palette d'appui 24 étant solidaire d'un montant latéral 22. Les palettes d'appui 24, et les montants latéraux 22, peuvent ainsi s'écarter ou se rapprocher l'une de l'autre et augmenter ou réduire ainsi la dimension de l'ouverture centrale 23.

De manière avantageuse, chaque palette d'appui 24 peut comprendre au moins un bras 25, latéral et saillant vers la palette opposée, définissant en partie le contour de l'ouverture centrale 23. Ces bras 25 permettent ainsi de refermer l'ouverture centrale 23 et limitent le risque que les agrafes 2 s'emmêlent et forment des grappes de pièces au cours des étapes de fabrication de ces pièces ou de leur transport.

Les bras 25 peuvent être disposés suivant différentes configurations qui ne sont nullement limitatives. On peut ainsi disposer un bras 25 sur chaque palette 24, deux bras 25 sur une seule des palettes d'appui 24 ou encore disposer plusieurs bras 25 sur chaque palette d'appui 24, comme cela est représenté sur la figure 2.

Les montants latéraux 22 présentant une première extrémité solidaire de la tête 21, ici respectivement solidaire d'une palette 24, et une seconde extrémité. Les secondes extrémités sont reliées entre elles de sorte que les deux montants latéraux 22 définissent un logement interne de l'agrafe 2.

De manière préférentielle, les montants latéraux 22 présentent une forme de V, l'évidemment de chaque V étant tournés l'un vers l'autre. Cette forme en V favorise le contact entre les faces extérieures des montants latéraux 22 et l'élément plan inférieur afin de former le deuxième appui B.

La figure 3 représente une goupille 3 conforme à un premier mode de réalisation de l'invention. Comme on l'a déjà énoncé, la goupille 3 est destinée à être insérée dans le logement interne de l'agrafe 2, par l'ouverture centrale 23, pour verrouiller l'assemblage.

La goupille 3 est avantageusement en matière plastique et réalisée par exemple par injection ou par construction additive.

La goupille 3 est formée d'un corps principal 32 et comprend au moins un pontet flexible 33, ici une paire de pontets flexibles 33 formés sur des cotés opposé du corps principal 32, destiné à entrer en contact avec au moins un des montants latéraux 22, ici avec chacun de ces montant latéraux 22, pour forcer le second appui B et maintenir les éléments plan 4 assemblés l'un à l'autre. La flexibilité de ces pontets 33 permet de rendre l'effort de montage du dispositif de fixation 1 moins dépendant de l'épaisseur des éléments plan 4 en pouvant se déformer et compenser différentes valeurs d'épaisseur.

Les pontets flexibles 33 sont disposés de part et d'autre du corps principal 32 de la goupille 3 de sorte à faire face aux deux montants latéraux 22 de l'agrafe 2. Les pontets flexibles 33 comprennent, de manière avantageuse, une portion centrale 331 reliée au corps principal 32 de la goupille 3 par deux portions flexibles 332. Les portions flexibles 332 ont généralement une épaisseur moindre que celle de la portion centrale 331 afin de conférer des propriétés de flexibilité à chaque pontet. La portion centrale 331 est destinée prendre appui sur le montant latéral 22 qui lui fait face.

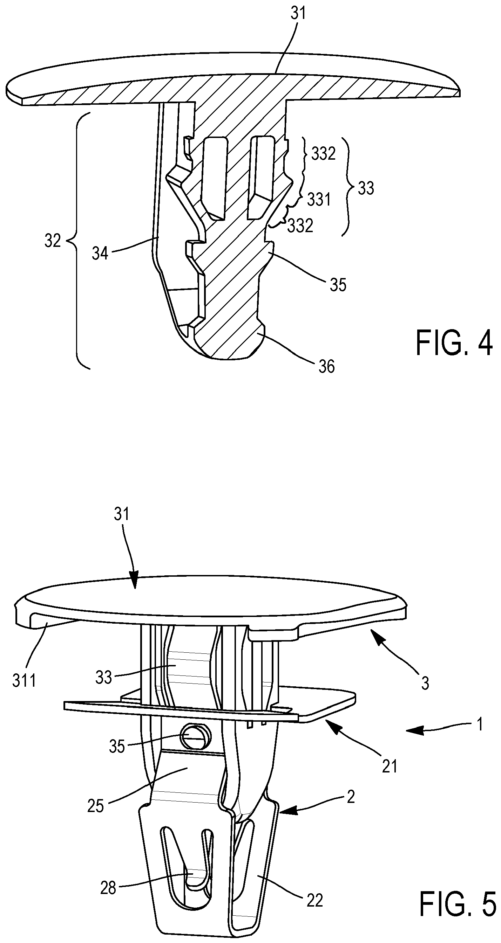

Selon un deuxième mode de réalisation représenté sur la figure 4, la portion centrale 331 du pontet flexible 33 peut porter un bossage. Ce bossage présente un somment dont la position peut être choisie pour entrer en contact avec le montant latéral qui lui fait face à un moment précis du montage, par exemple en bout de course d'insertion de la goupille.

De manière avantageuse, le corps principal 32 de la goupille 3 est surmonté d'une tête plane 31. La tête 31 de la goupille 3 à pour but de servir de surface d'appui pour permettre une insertion facile de la goupille 3 dans l'agrafe 2 par simple pression. La tête 32 de la goupille 3 sert aussi à limiter l'enfoncement de la goupille 3 dans l'agrafe 2, par effet de butée, afin d'éviter que la goupille 3 pénètre intégralement dans le logement interne de l'agrafe 2 et qu'il ne soit plus possible de l'en extraire.

De manière préférentielle, la tête de la goupille 3 est munie d'au moins une fente 311 destinée à accueillir l'extrémité d'un outil pour faciliter le démontage du dispositif de fixation 1. Il peut par exemple s'agir d'un tournevis à bout plat que l'on vient insérer dans l'une de ces fentes 311 pour pouvoir exercer un effet levier et séparer la goupille 3 de l'agrafe 2.

Afin de pouvoir indexer et guider l'insertion de la goupille 3 dans le logement interne de l'agrafe 2, la tête 21 de l'agrafe 2 peut, de manière avantageuse, être munie de fentes 26 pour coopérer avec des nervures de guidage 34 disposées sur la goupille 3. Dans le mode de réalisation illustré par les figures 2 et 3, la goupille 3 est dotée de deux paires de nervures de guidage 34 de part et d'autre de chaque pontet flexible 33 et, par conséquent, la tête 21 de l'agrafe 2 comprend deux paires de fentes 26.

De manière avantageuse également, la goupille 3 porte au moins un cran de maintien 35 destiné à se loger dans au moins un trou de verrouillage 27 de l'agrafe 2 pour maintenir la goupille 3 dans l'agrafe 2 en position de livraison. La position de livraison correspond à la position dans laquelle la goupille 3 est assemblée à l'agrafe 2 avant que les pontets flexibles 33 ne franchissent l'ouverture centrale 23 de l'agrafe 2 et ne soient en contact avec les montants latéraux 22. Afin d'obtenir cette position, le cran de maintien 35 est généralement positionné en amont des pontets flexibles 33 selon le sens d'insertion de la goupille. Le cran de maintien 35 peut de manière avantageuse comprendre une face inclinée pour pouvoir s'escamoter du trou de verrouillage 27 si l'on exerce une force de pression suffisante sur la goupille 3.

La goupille 3 peut également comporter au moins un cran de verrouillage (non représenté sur les figures) destiné à se loger dans le trou de verrouillage 27 de l'agrafe 2 pour maintenir la goupille 3 dans l'agrafe 2 en position de verrouillage. La position de verrouillage correspond à la position dans laquelle la tête 31 de la goupille 3 est en butée avec la tête 21 de l'agrafe 2. Afin d'obtenir cette position, ce cran de verrouillage est généralement positionné en aval des pontets flexibles 33 selon le sens d'insertion de la goupille.

Pour maintenir la goupille 3 dans l'agrafe 2 en position de verrouillage, chaque montant latéral 22 de l'agrafe 2 peut, de manière avantageuse, présenter une patte de blocage 28, pénétrante dans le logement de l'agrafe 2, destinée à coopérer avec une zone de blocage 36 de la goupille. Les deux zones de blocage 36 sont avantageusement situées vers l'extrémité libre du corps principal 32 de la goupille 3, à l'opposé de la tête plane 31. La zone de blocage 36 peut être une rampe de mise sous tension.

### Mise en oeuvre du dispositif de fixation

Le dispositif de fixation 1 de l'invention ne nécessite aucun outil pour son montage sur les éléments plans 4, qui comprend plusieurs étapes.

La première étape, représentée sur la figure 5, consiste à assembler l'agrafe 2 et la goupille 3 afin de placer le dispositif de fixation en position de livraison, dans laquelle l'agrafe 2 est rendue solidaire de la goupille 3.

Au cours de cette étape, la goupille 3 est introduite dans l'ouverture centrale 23 de l'agrafe 2, en alignant les nervures de guidage 24 avec les fentes 26 de la tête de l'agrafe 2, jusqu'à ce que le cran de maintien 35 de la goupille 3 se loge dans le trou de verrouillage 27 de l'agrafe 2 et marque un point d'arrêt.

Au cours de la deuxième étape, et comme représenté par les figures 6A et 6B, on procède à l'assemblage du dispositif de fixation 1 avec les éléments plans 4. Le dispositif de fixation 1 est inséré dans les ouvertures 41 des éléments plans 4 jusqu'à ce que la tête plane 21 de l'agrafe 2, et notamment les palettes formant la tête plane, entrent en butée avec l'élément plan supérieur. On forme ainsi un premier appui A entre l'agrafe 2 et l'un des éléments plans 4. Les éléments plans assemblés sont disposés sous la tête de l'agrafe 2 et contre la face extérieure des montants latéraux, notamment lorsque ceux-ci présentent une forme en V. Durant cette étape, l'agrafe 2 et la goupille 3 sont toujours maintenues en position de livraison.

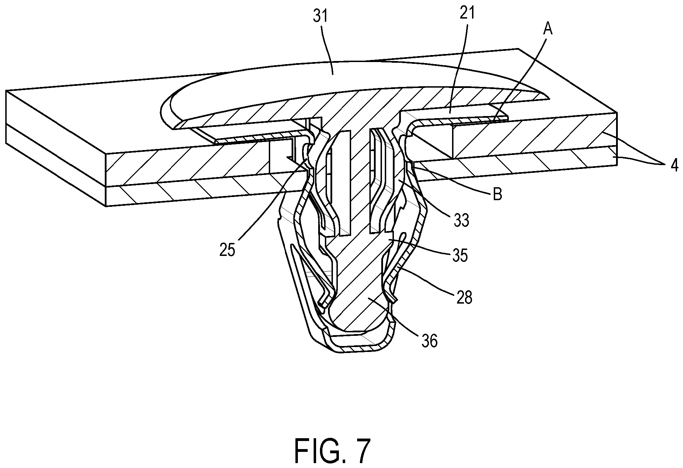

Au cours de la troisième étape, représentée sur les figures 6C et 7, on procède au verrouillage du dispositif de fixation 1 sur l'assemblage formé des éléments plans. Une pression est exercée sur la tête 31 de la goupille 3 afin d'escamoter le cran de maintien 35 du trou de verrouillage 27 et d'enfoncer la goupille 3 dans le logement interne de l'agrafe 2 jusqu'à ce que la tête 31 de la goupille 3 soit en butée contre la tête 21 de l'agrafe 2 et/ou contre l'élément plan supérieur.

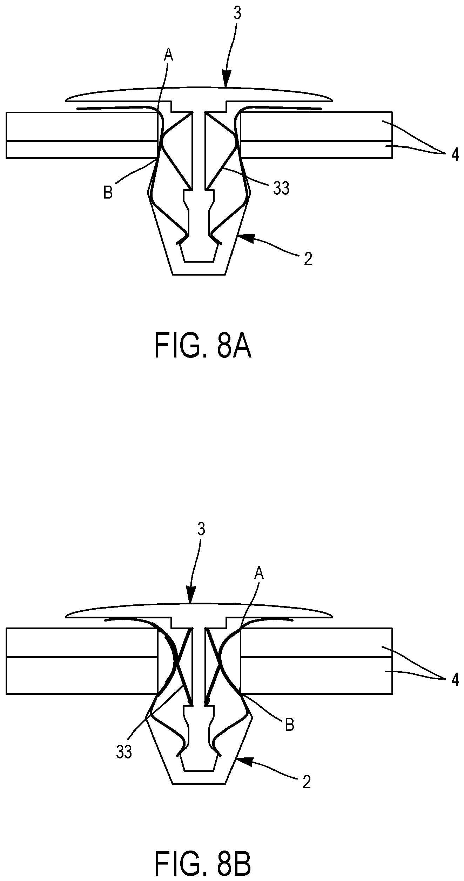

Après que le cran de maintien 35 se soit escamoté du trou de verrouillage 27, la paire de pontets flexibles 33 pénètre dans le logement interne de l'agrafe et vient en appui sur les montants latéraux 22 de sorte à les plaquer contre les bords des ouvertures 41 des éléments plans 4, et notamment de l'élément plan inférieur, formant ainsi le second appui B permettant de maintenir les éléments plans l'un contre l'autre. En position de verrouillage du dispositif de fixation 1, et comme cela est visible sur la figure 7, les éléments plans 4 sont donc maintenus les uns aux autres en étant coincé entre la tête 21 de l'agrafe 2, qui forme le premier appui A, avec la surface principale de l'un des éléments plans 4, et les montants latéraux 22 qui forment le second appui B sur un autre élément plan 4. En d'autres termes et comme cela est visible sur les figures 7 et 8, les pontets flexibles, en position de verrouillage, se trouvent au moins en partie au niveau de l'ouverture entre le premier appui A et le deuxième appui B.

Les figures 8A et 8B illustrent un dispositif de fixation 1 en position de verrouillage pour deux épaisseurs différentes d'éléments plans. Plus spécifiquement, les éléments plans de la figure 8B ont une épaisseur plus grande que ceux de la figure 8A. On observe que lorsque l'épaisseur des éléments plans 4 est plus importante, les montants latéraux 22 ont tendance à être plus rapprochés l'un de l'autre, et à réduire l'espace interne qu'ils définissent. Dans ce cas aussi, les pontets flexibles 33 se déforment pour permettre le passage de l'agrafe sans nécessiter un effort de montage accru. En l'absence de ces pontets flexibles 33, il aurait fallu exercer un effort de montage important pour permettre le passage de l'agrafe 2 et forcer le second appui B sur les montants latéraux.

Grâce à la flexibilité des pontets 33, il est ainsi possible de maintenir les appuis A, B en exerçant un effort de montage moins dépendant de l'épaisseur des éléments plans 4, tout en assurant un effort de retenu important prévenant l'extraction du dispositif de fixation 1.

En effet, selon l'épaisseur des éléments plans 4, les montants 22 de l'agrafe 2, de part leur forme en V, vont plus ou moins se rapprocher l'un de l'autre lors de l'insertion de l'agrafe 2 à travers les ouvertures 41 modifiant ainsi les dimensions de l'ouverture centrale 23. Les dimensions de l'ouverture centrale 23 se réduisent notamment avec l'augmentation en épaisseur des éléments plans 4.

La présence des pontets flexibles 33 permet à la goupille 3 de s'adapter, par déformation des pontets, à la variation des dimensions de l'ouverture centrale 23. En l'absence de pontets 33 flexible, il faudrait fournir un effort de plus en plus important avec l'augmentation de l'épaisseur des éléments plans 4 pour faire passer la goupille 3 de dimension fixe à travers une ouverture centrale 23 dont les dimensions se réduisent.

L'effort de montage est donc moins dépendant de l'épaisseur des éléments plans 4 grâce à la flexibilité des pontets 33 qui permettent d'ajuster les dimensions de la goupille 3 à celle de l'ouverture centrale 23.

Lors de l'insertion de la goupille 3 dans le logement interne de l'agrafe 2, les pattes de blocage 28 de l'agrafe 2 viennent également en contact avec les zones de blocage 36 du corps de la goupille 3. Ces pattes de blocage 28 sont tout d'abord écartées par les zones de blocage 36, puis viennent se refermer au-dessus de la zone de blocage 36. Les pattes de blocage 28 exercent ainsi une force de retenue sur les zones de blocage 36 de la goupille 3 pour la maintenir en position verrouiller.

Par ailleurs, le cran de verrouillage situé en aval des pontets 33, lorsqu'il est présent, peut se loger dans le trou de verrouillage 27 pour améliorer le maintien du dispositif de fixation en position verrouillée.

Si l'on souhaite démonter le dispositif de verrouillage 1 des éléments plan 4, l'extrémité d'un outil peut être insérée dans l'une des fentes 311 de la tête 31 de la goupille 3 pour faire un effet levier et exercer une force suffisante pour sortir le dispositif 1 de l'état de verrouillage.

Bien entendu l'invention n'est pas limitée au mode de mise en oeuvre décrit et on peut y apporter des variantes de réalisation sans sortir du cadre de l'invention tel que défini par les revendications.

## Revendications

1. Dispositif de fixation (1) d'un assemblage comprenant au moins deux éléments plans (4), les éléments plans (4) étant pourvus d'ouvertures (5) mises en regard les unes aux autres lorsqu'ils sont en position d'assemblage, le dispositif de fixation (1) comprenant :
a. Une agrafe (2) destinée à être insérée dans les ouvertures (41) des éléments plans (4) et destinée à maintenir les éléments plans les uns aux autres entre un premier (A) et un second appui (B), l'agrafe (2) comprenant :
i. une tête plane (21) pour prendre le premier appui (A) sur la surface principale de l'un des éléments plan (4), la tête plane (21) présentant une ouverture centrale (23) pour accéder à un logement interne de l'agrafe (2);
ii. deux montants latéraux (22) configurés pour prendre le second appui (B) sur un autre des éléments plans (4), les montants latéraux (22) présentant une première extrémité solidaire de la tête (21) et une seconde extrémité, les secondes extrémités étant reliées entre elles de sorte que les deux montants latéraux (22) définissent le logement interne de l'agrafe (2) ;
b. Une goupille (3) destinée à être insérée dans le logement interne de l'agrafe (2) pour verrouiller l'assemblage;
le dispositif de fixation (1) étant **caractérisé en ce que** la goupille (3) comprend au moins un pontet flexible (33) présentant une portion centrale (331) reliée à un corps principal (32) de la goupille par deux portions flexibles (332), le pontet flexible (33) étant destiné à entrer en contact avec un montant latéral (22) de l'agrafe (2) pour forcer le second appui (B) et maintenir les éléments plan (4) assemblés l'un à l'autre.

2. Dispositif de fixation (1) selon la revendication précédente dans lequel la tête plane (21) de l'agrafe (2) est formée de deux palettes d'appui (24) chaque palette d'appui (24) étant solidaire d'un montant latéral (22).

3. Dispositif de fixation (1) selon la revendication précédente dans lequel chaque palette d'appui (24) comprend au moins un bras (25) définissant en partie le contour de l'ouverture centrale (23).

4. Dispositif de fixation selon la revendication précédente dans lequel la tête de l'agrafe (21) est munie de fentes (26) pour coopérer avec des nervures de guidage (34) disposées sur la goupille (3).

5. Dispositif de fixation (1) selon l'une des revendications précédentes dans lequel les montants latéraux (22) ont une forme en V.

6. Dispositif de fixation selon l'une des revendications précédentes dans lequel la goupille (3) porte au moins un cran de maintien (35) destiné à se loger dans au moins un trou de verrouillage (27) de l'agrafe (2) pour maintenir la goupille (3) dans l'agrafe (2) en position de livraison.

7. Dispositif de fixation (1) selon la revendication précédente dans lequel la goupille (3) porte au moins un cran de verrouillage destiné à se loger dans le trou de verrouillage (27) de l'agrafe (2) pour maintenir la goupille (3) dans l'agrafe (2) en position de verrouillage.

8. Dispositif de fixation (1) selon l'une des revendications précédentes dans chaque montant latéral (22) de l'agrafe (2) présente une patte de blocage (28) destinée à coopérer avec une zone de blocage (26) de la goupille (3) pour maintenir la goupille (3) dans l'agrafe (2) en position de verrouillage.

9. Dispositif de fixation (1) selon l'une des revendications précédentes dans lequel la goupille (3) est surmontée d'une tête plane (31).

10. Dispositif de fixation (1) selon la revendication précédente dans lequel la tête (31) de la goupille (3) est munie d'au moins une fente (311) destinée à accueillir l'extrémité d'un outil pour faciliter le démontage du dispositif de fixation (1).

11. Dispositif de fixation (1) selon l'une des revendications précédentes dans lequel la portion centrale (331) du pontet (33) porte un bossage.

12. Dispositif de fixation selon l'une des revendications précédentes dans lequel la goupille (3) est en matière plastique et l'agrafe (2) en métal.

13. Dispositif de fixation selon l'une des revendications précédentes dans lequel la goupille (3) comprend une paire de pontets flexibles (33) destinés à entrer en contact avec les montants latéraux de l'agrafe (2).

## Patentansprüche

1. Befestigungsvorrichtung (1) einer Anordnung, umfassend mindestens zwei Flächenelemente (4), wobei die Flächenelemente (4) mit Öffnungen (5) versehen sind, die einander gegenüberliegen, wenn sie sich in der Anordnungsposition befinden, die Befestigungsvorrichtung (1) umfassend:
a. eine Klammer (2) die dafür bestimmt ist, in die Öffnungen (41) der Flächenelemente (4) eingeführt zu werden, und dafür bestimmt ist, die Flächenelemente zwischen einer ersten (A) und einer zweiten Auflage (B) gegenseitig festzuhalten, die Klammer (2) umfassend:
i. einen Flächenkopf (21) zum Aufnehmen der ersten Auflage (A) auf der Hauptoberfläche eines der Flächenelemente (4), wobei der Flächenkopf (21) eine zentrale Öffnung (23) zum Zugreifen auf ein Innengehäuse der Klammer (2) aufweist;
ii. zwei Seitenstützen (22), die konfiguriert zum Aufnehmen der zweiten Auflage (B) auf einem anderen der Flächenelemente (4) konfiguriert sind, wobei die Seitenstützen (22) ein erstes Ende einstückig mit dem Kopf (21) und ein zweites Ende aufweisen, wobei die zweiten Enden so miteinander verbunden sind, dass die zwei Seitenstützen (22) das Innengehäuse der Klammer (2) definieren;
b. einen Stift (3), der dafür bestimmt ist, zum Verriegeln der Anordnung in das Innengehäuse der Klammer (2) eingeführt zu werden;
wobei die Befestigungsvorrichtung (1) **dadurch gekennzeichnet ist, dass** der Stift (3) mindestens eine flexible Brücke (33) umfasst, die einen zentralen Abschnitt (331) aufweist, der mit einem Hauptkörper (32) des Stifts durch zwei flexible Abschnitte (332) verbunden ist, wobei die flexible Brücke (33) dafür bestimmt ist, mit einer Seitenstütze (22) der Klammer (2) zum Einzwängen der zweiten Auflage (B) und gegenseitigen Festhalten der angeordneten Flächenelemente (4) in Berührung zu kommen.

2. Befestigungsvorrichtung (1) nach dem vorstehenden Anspruch, wobei der Flächenkopf (21) der Klammer (2) aus zwei Auflagepaletten (24) ausgebildet ist, wobei jede Auflagepalette (24) mit einer Seitenstütze (22) einstückig ist.

3. Befestigungsvorrichtung (1) nach dem vorstehenden Anspruch, wobei jede Auflagepalette (24) mindestens einen Arm (25) umfasst, der teilweise die Kontur der zentralen Öffnung (23) definiert.

4. Befestigungsvorrichtung nach dem vorstehenden Anspruch, wobei der Kopf der Klammer (21) mit Schlitzen (26) zum Zusammenwirken mit Führungsrippen (34) ausgestattet ist, die auf dem Stift (3) eingerichtet sind.

5. Befestigungsvorrichtung (1) nach einem der vorstehenden Ansprüche, wobei die Seitenstützen (22) ein V-Form besitzen.

6. Befestigungsvorrichtung nach einem der vorstehenden Ansprüche, wobei der Stift (3) mindestens eine Festhaltekerbe (35) trägt, die dafür bestimmt ist, in mindestens einem Verriegelungsloch (27) der Klammer (2) zum Festhalten des Stifts (3) in der Klammer (2) in der Abgabeposition untergebracht zu werden.

7. Befestigungsvorrichtung (1) nach dem vorstehenden Anspruch, wobei der Stift (3) mindestens eine Verriegelungskerbe trägt, die dafür bestimmt ist, in dem Verriegelungsloch (27) der Klammer (2) zum Festhalten des Stifts (3) in der Klammer (2) in Verriegelungsposition untergebracht zu werden.

8. Befestigungsvorrichtung (1) nach einem der vorstehenden Ansprüche, die in jeder Seitenstütze (22) der Klammer (2) eine Verschlusslasche (28) aufweist, die dafür bestimmt ist, mit einer Verschlusszone (26) des Stifts (3) zum Festhalten des Stifts (3) in der Klammer (2) in der Verriegelungsposition zusammenzuwirken.

9. Befestigungsvorrichtung (1) nach einem der vorstehenden Ansprüche, wobei der Stift (3) durch einen Flächenkopf (31) überragt wird.

10. Befestigungsvorrichtung (1) nach dem vorstehenden Anspruch, wobei der Kopf (31) des Stifts (3) mit mindestens einem Schlitz (311) ausgestattet ist, der dafür bestimmt ist, das Ende eines Werkzeugs zum Erleichtern der Zerlegung der Befestigungsvorrichtung (1) aufzunehmen.

11. Befestigungsvorrichtung (1) nach einem der vorstehenden Ansprüche, wobei der zentrale Abschnitt (331) der Brücke (33) eine Erhebung trägt.

12. Befestigungsvorrichtung nach einem der vorstehenden Ansprüche, wobei der Stift (3) aus Kunststoff und die Klammer (2) aus Metall besteht.

13. Befestigungsvorrichtung nach einem der vorstehenden Ansprüche, wobei der Stift (3) ein Paar von flexiblen Brücken (33) umfasst, die dafür bestimmt sind, mit den Seitenstützen der Klammer (2) in Berührung zu kommen.

## Claims

1. Fastening device (1) for fastening an assembly comprising at least two planar elements (4), the planar elements (4) being provided with openings (5) that face each other when the planar elements are in the assembly position, the fastening device (1) comprising:
a. a clip (2) which is intended to be inserted into the openings (41) of the planar elements (4) and intended to hold the planar elements together between a first support point (A) and a second support point (B), the clip (2) comprising:
i. a planar head (21) for forming the first support point (A) on the main surface of one of the planar elements (4), the planar head (21) having a central opening (23) in order to access an inner cavity of the clip (2);
ii. two lateral upright members (22) designed to form the second support point (B) on another of the planar elements (4), the lateral upright members (22) having a first end which is secured to the head (21) as well as a second end, the second ends being connected to each other in such a way that the two lateral upright members (22) define the inner cavity of the clip (2);
b. a pin (3) which is intended to be inserted into the inner cavity of the clip (2) in order to lock the assembly;
the fastening device (1) being **characterized in that** the pin (3) comprises at least one flexible bridging piece (33) having a central portion (331) which is connected to a main body (32) of the pin by two flexible portions (332), the flexible bridging piece (33) being intended to come into contact with a lateral upright member (22) of the clip (2) in order to force the second support point (B) and to hold the assembled planar elements (4) together.

2. Fastening device (1) according to the preceding claim, wherein the planar head (21) of the clip (2) is formed by two support pallets (24), each support pallet (24) being secured to a lateral upright member (22).

3. Fastening device (1) according to the preceding claim, wherein each support pallet (24) comprises at least one arm (25) which partially defines the outline of the central opening (23).

4. Fastening device according to the preceding claim, wherein the head of the clip (21) is provided with slots (26) to cooperate with guide ribs (34) arranged on the pin (3).

5. Fastening device (1) according to one of the preceding claims, wherein the lateral upright members (22) have a V shape.

6. Fastening device according to one of the preceding claims, wherein the pin (3) bears at least one retaining notch (35) which is intended to be housed in at least one locking hole (27) of the clip (2) so as to hold the pin (3) in the clip (2) in the delivery position.

7. Fastening device (1) according to the preceding claim, wherein the pin (3) bears at least one locking notch which is intended to be housed in the locking hole (27) of the clip (2) so as to hold the pin (3) in the clip (2) in the locking position.

8. Fastening device (1) according to one of the preceding claims, wherein each lateral upright member (22) of the clip (2) has a blocking tab (28) which is intended to cooperate with a blocking zone (26) of the pin (3) so as to hold the pin (3) in the clip (2) in the locking position.

9. Fastening device (1) according to one of the preceding claims, wherein the pin (3) is topped by a planar head (31).

10. Fastening device (1) according to the preceding claim, wherein the head (31) of the pin (3) is provided with at least one slot (311) which is intended to accommodate the end of a tool so as to facilitate the dismantling of the fastening device (1).

11. Fastening device (1) according to one of the preceding claims, wherein the central portion (331) of the bridging piece (33) bears a boss.

12. Fastening device according to one of the preceding claims, wherein the pin (3) is made from plastics material and the clip (2) is made from metal.

13. Fastening device according to one of the preceding claims, wherein the pin (3) comprises a pair of flexible bridging pieces (33) intended to come into contact with the lateral upright members of the clip (2).
